# EUROPEAN PATENT SPECIFICATION

(11) **EP 3 602 427 B1**
(45) Date of publication and mention of the grant of the patent: **04.03.2026**
(21) Application number: 17907204.6
(22) Date of filing: 20.06.2017
(51) Int. Cl.: G06Q 10/02, G06Q 10/04, G06Q 50/14

(54) **METHOD AND APPARATUS FOR GENERATING TRAVEL PLAN EVALUATION INFORMATION AND STORAGE MEDIUM**
VERFAHREN UND VORRICHTUNG ZUR ERZEUGUNG VON INFORMATIONEN ZUR BEURTEILUNG EINES REISEPLANS UND SPEICHERMEDIUM
APPAREIL ET PROCÉDÉ DE GÉNÉRATION D'INFORMATIONS D'ÉVALUATION DE PLAN DE DÉPLACEMENT ET SUPPORT D'INFORMATIONS

(30) Priority: 26.04.2017 CN 201710283180
(43) Date of publication of application: 05.02.2020
(73) Proprietor: Siemens Mobility GmbH, 80997 München (DE)
(72) Inventor: YU, Ji Kai, Shanghai 201100 (CN); MORRA, Carlos, 64646 Heppenheim (DE)
(74) Representative: Isarpatent
(86) International application number: PCT/CN2017/089232
(87) International publication number: WO 2018/196134

(56) References cited:
- CN-A- 102 867 408
- CN-A- 105 513 400
- CN-A- 106 096 744
- US-A1- 2007 038 367
- US-A1- 2009 240 517
- US-A1- 2013 184 992
- US-A1- 2015 332 176
- CHRYSOULAKIS NEKTARIOS ET AL: "Sustainable urban metabolism as a link between bio-physical sciences and urban planning: The BRIDGE project", LANDSCAPE AND URBAN PLANNING, ELSEVIER, AMSTERDAM, NL, vol. 112, 14 January 2013 (2013-01-14), pages 100 - 117, XP028987641, ISSN: 0169-2046, DOI: 10.1016/J.LANDURBPLAN.2012.12.005
- OBORNE D J: "Passenger comfort - an overview", 1 September 1978 (1978-09-01), pages 131 - 136, XP055956915, Retrieved from the Internet <URL:https://www.sciencedirect.com/science/article/pii/0003687078900029> [retrieved on 20220901]
- AMADOR-JIMENEZ LUIS ET AL: "A comfort index for public transportation: Case study of Montreal", 2016 IEEE INTERNATIONAL CONFERENCE ON INTELLIGENT TRANSPORTATION ENGINEERING (ICITE), IEEE, 20 August 2016 (2016-08-20), pages 3 - 7, XP032974515, DOI: 10.1109/ICITE.2016.7581297
- CAN-MING CAO ET AL: "An empirical study on tourist satisfaction about high speed railway based on factors analysis A case study on Shanghai-Nanjing intercity high speed railway", SERVICE SYSTEMS AND SERVICE MANAGEMENT (ICSSSM), 2012 9TH INTERNATIONAL CONFERENCE ON, IEEE, 2 July 2012 (2012-07-02), pages 518 - 523, XP032211738, ISBN: 978-1-4577-2024-6, DOI: 10.1109/ICSSSM.2012.6252291
- XIANGHAO SHEN ET AL: "Analysis of bus passenger comfort perception based on passenger load factor and in-vehicle time", SPRINGERPLUS, BIOMED CENTRAL LTD, LONDON, UK, vol. 5, no. 1, 22 January 2016 (2016-01-22), pages 1 - 10, XP021231370, DOI: 10.1186/S40064-016-1694-7

## Description

### BACKGROUND

### Technical Field

The present invention relates to the field of service systems, and in particular, to a method and an apparatus for generating travel plan evaluation information and a storage medium.

### Related Art

When travelling in a city or between cities, people usually generate planned routes by using navigation tools, such as Baidu Map and Tencent Map. Some tools provide multiple planned route choices including different transportation means, for example, planned routes including trains and buses. For each planned route, a navigation tool usually provides possible journey time of the planned route.

US 2015/0332176 A1 relates to a travel comfort index. It discloses a booking system that can calculate a comfort level of a trip by including factors for each section of the trip (e.g. seat width, travel distance in transit, ...).

### SUMMARY

The invention is defined, in one hand, by a method for generating travel plan evaluation information according to claim 1, and on the other hand, by an apparatus for generating travel plan evaluation information and a storage medium according to claims 6 and 9, respectively, to provide travel plan information from various aspects, thereby improving the travel plan efficiency and effectiveness of the system.

A method for generating travel plan evaluation includes: for each travel planned route in at least one travel planned route from a start point to an end point of a user, determining at least one evaluation object on the travel planned route; for each evaluation object in the at least one evaluation object, determining a comfort consideration parameter set corresponding to the evaluation object, and according to the determined comfort consideration parameter set, obtaining evaluation information of each comfort consideration parameter in the comfort consideration parameter set; and generating comfort evaluation information of the evaluation object according to the evaluation information of each comfort consideration parameter in the comfort consideration parameter set. In view of this, travel plan information can be provided from various aspects for the comfort consideration parameter set, thereby improving the travel plan efficiency and effectiveness of the system.

In an implementation, the at least one evaluation object includes a transportation means, and the comfort consideration parameter set corresponding to the transportation means includes all or some of the following parameter evaluation types: convenience related parameters, caring related parameters, and timeliness related parameters. The parameters in the comfort consideration parameter set are divided into different parameter evaluation types, so that evaluation information of a same type can be processed in a more concentrated manner for display, thereby facilitating making more targeted choices by a user.

In an implementation, the convenience related parameters include all or some of the following parameters: passenger density and/or whether there is a vacant seat; whether there is a luggage position; and whether there is WIFI; the caring related parameters include all or some of the following parameters: an indoor air status and/or whether there is an air conditioner; an air quality index (AQI); and whether there is a priority seat; and the timeliness related parameters include all or some of the following parameters: a road condition and/or whether congestion can be avoided; a punctuality rate and/or whether there are frequent delays; and a walking distance and/or transfer convenience. The comfort consideration parameters included in an example of the present invention cover most of comfort related indexes that a user may be concerned with, and can basically satisfy comfort consideration requirements of the user.

In an implementation, the generating comfort evaluation information of the evaluation object according to the evaluation information of each comfort consideration parameter in the comfort consideration parameter set includes: generating a comfort evaluation list and/or chart and/or text description of the evaluation object according to the evaluation information of each comfort consideration parameter in the comfort consideration parameter set. In this embodiment, comfort evaluation results of the evaluation object may be indicated more intuitively in a manner of a list and/or chart.

In an implementation, the evaluation information of each comfort consideration parameter in the comfort consideration parameter set is represented by a Boolean value, and T represents that the transportation means supports a service represented by the comfort consideration parameter or positive evaluation for the service, and F represents that the transportation means does not support the service represented by the comfort consideration parameter or negative evaluation for the service; the generating a comfort evaluation list and/or chart of the evaluation object according to the evaluation information of each comfort consideration parameter in the comfort consideration parameter set includes: predetermining a net-shaped chart, where the net-shaped chart includes a plurality of line segments radiating from a center to an outer edge, different line segments represent different comfort consideration parameters, and a value of each line segment close to a central side is F, and a value of each line segment close to an edge side is T; and according to a Boolean value evaluation result of each comfort consideration parameter in the comfort consideration parameter set, generating, in the net-shaped chart, a curve connecting the Boolean value evaluation results of the comfort consideration parameters. In this embodiment, the evaluation information of each comfort consideration parameter is represented by a Boolean value, so that whether the evaluation object supports the service represented by each comfort consideration parameter and whether a user makes positive or negative evaluation on the service may be indicated more intuitively.

In an implementation, the evaluation information of each comfort consideration parameter in the comfort consideration parameter set is represented by a value within [S, Z], S is a lower limit value of a preset reference interval, Z is an upper limit value of the preset reference interval, and different values represent evaluation degrees for a service represented by the comfort consideration parameter; the generating a comfort evaluation list and/or chart of the evaluation object according to the evaluation information of each comfort consideration parameter in the comfort consideration parameter set includes: predetermining a net-shaped chart, where the net-shaped chart includes a plurality of line segments radiating from a center to an outer edge, different line segments represent different comfort consideration parameters, a value of each line segment close to a central side is S, and a value of each line segment close to an edge side is Z, different positions in the middle correspond to different values, and the values gradually increase from the center to the edge; and according to a value evaluation result of each comfort consideration parameter in the comfort consideration parameter set, generating, in the net-shaped chart, a curve connecting the value evaluation results of the comfort consideration parameters. In this embodiment, the evaluation information of each comfort consideration parameter is represented by a value within a value interval, so that the supporting degree of the evaluation object for the service represented by each comfort consideration parameter and positive or negative evaluation degree of a user for the service may be indicated more intuitively.

In an implementation, the comfort consideration parameters are divided into different parameter evaluation types, and line segments corresponding to comfort consideration parameters of a same parameter evaluation type located at adjacent positions in the net-shaped chart. In this way, evaluation results of a same type may be displayed in a more concentrated manner, thereby facilitating making choices by a user.

An apparatus for generating travel plan evaluation information includes: an evaluation object determining unit, configured to: for each travel planned route in at least one travel planned route from a start point to an end point of a user, determine at least one evaluation object on the travel planned route; a consideration parameter set determining unit, configured to: for each evaluation object in the at least one evaluation object, determine a comfort consideration parameter set corresponding to the evaluation object; an evaluation information obtaining unit, configured to: according to the comfort consideration parameter set that corresponds to the evaluation object and is determined by the consideration parameter set determining unit, obtain evaluation information of each comfort consideration parameter in the comfort consideration parameter set; and a comprehensive evaluation unit, configured to generate comfort evaluation information of the evaluation object according to the evaluation information of each comfort consideration parameter in the comfort consideration parameter set. In view of this, travel plan information can be provided from various aspects for the comfort consideration parameter set, thereby improving the travel plan efficiency and effectiveness of the system.

In an implementation, the at least one evaluation object determined by the evaluation object determining unit includes a transportation means; and the comfort consideration parameter set that corresponds to the transportation means and is determined by the consideration parameter set determining unit includes all or some of timeliness related parameters, convenience related parameters, and caring related parameters. The parameters in the comfort consideration parameter set are divided into different parameter evaluation types, so that evaluation information of a same type may be processed in a more concentrated manner for display, thereby facilitating making more targeted choices by a user.

In an implementation, the evaluation information that is of each comfort consideration parameter in the comfort consideration parameter set and that is obtained by the evaluation information obtaining unit is represented by a Boolean value, and T represents that the transportation means supports a service represented by the comfort consideration parameter or positive evaluation for the service, and F represents that the transportation means does not support the service represented by the comfort consideration parameter or negative evaluation for the service; and the comprehensive evaluation unit predetermines a net-shaped chart, where the net-shaped chart includes a plurality of line segments radiating from a center to an outer edge, different line segments represent different comfort consideration parameters, and a value of each line segment close to a central side is F, and a value of each line segment close to an edge side is T; and according to a Boolean value evaluation result of each comfort consideration parameter in the comfort consideration parameter set, a curve connecting the Boolean value evaluation results of the comfort consideration parameters is generated in the net-shaped chart. In this embodiment, the evaluation information of each comfort consideration parameter is represented by a Boolean value, so that whether the evaluation object supports the service represented by each comfort consideration parameter and whether a user makes positive or negative evaluation on the service may be indicated more intuitively.

In an implementation, the evaluation information that is of each comfort consideration parameter in the comfort consideration parameter set and that is obtained by the evaluation information obtaining unit is represented by a value within [S, Z], S is a lower limit value of a preset reference interval, Z is an upper limit value of the preset reference interval, and different values represent evaluation degrees for a service represented by the comfort consideration parameter; and the comprehensive evaluation unit predetermines a net-shaped chart, where the net-shaped chart includes a plurality of line segments radiating from a center to an outer edge, different line segments represent different comfort consideration parameters, a value of each line segment close to a central side is S, and a value of each line segment close to an edge side is Z, different positions in the middle correspond to different values, and the values gradually increase from the center to the edge; and according to a value evaluation result of each comfort consideration parameter in the comfort consideration parameter set, a curve connecting the value evaluation results of the comfort consideration parameters is generated in the net-shaped chart. In this embodiment, the evaluation information of each comfort consideration parameter is represented by a value within a value interval, so that the supporting degree of the evaluation object for the service represented by each comfort consideration parameter and positive or negative evaluation degree of a user for the service may be indicated more intuitively.

A computer readable storage medium provided in an embodiment of the present invention stores a computer program, where when the computer program is executed by a processor, steps as defined in claims 1 to 5.

### BRIEF DESCRIPTION OF THE DRAWINGS

Preferable embodiments of the present invention will be described below in detail with reference to the accompanying drawings, so that a person of ordinary skill is clearer about the foregoing and other features and advantages of the present invention. In the accompanying drawings:
FIG. 1 is an exemplary flowchart of a method for generating travel plan evaluation information according to an embodiment of the present invention;
FIG. 2 is a display diagram of evaluation information of comfort consideration parameters of an evaluation object in an example of the present invention;
FIG. 3 is a display diagram of evaluation information of comfort consideration parameters of an evaluation object in another example of the present invention; and
FIG. 4 is an exemplary structural diagram of an apparatus for generating travel plan evaluation information according to an embodiment of the present invention.

Reference signs are as follows:

| Reference sign | Meaning |
|---|---|
| 101 to 104 | Steps |
| A | Whether congestion can be avoided |
| B | Punctuality rate |
| C | Transfer convenience |
| D | Whether there is a vacant seat |
| E | Whether there is a luggage position |
| F | Whether there is WIFI |
| G | Whether there is an air conditioner |
| H | AQI |
| I | Whether there is a priority seat |
| 401 | Evaluation object determining unit |
| 402 | Consideration parameter set determining unit |
| 403 | Evaluation information obtaining unit |
| 404 | Comprehensive evaluation unit |

### DETAILED DESCRIPTION

In an embodiment of the present invention, although in the prior art, at least one travel planned route from a start point to an end point of a user can be provided, there is no information about more aspects of each travel planned route. For example, some old passengers, passengers with children, passengers with much luggage, and passengers that need to work on the journey may be more concerned with information related with comfort on the journey, for example, whether there is an air conditioner, whether there is a sufficient luggage position, whether there is congestion, whether the road is unimpeded, whether there is WIFI for surfing the Internet, and how the air quality is on a transportation means (an air plane, a bus, a train, a taxi, a shared vehicle, or the like). In addition, although sometimes, possible journey time of the planned route may also be provided, the time is usually provided when there is no delay. In addition, although estimated time of arrival of a transportation means is listed on a display board of each platform to facilitate estimation of waiting time by a passenger, the passenger cannot obtain the time in advance when selecting a planned route. However, all the information is discretely distributed on different branches or areas, and therefore generally, summarizing the information to generate evaluation information and providing the evaluation information along with each travel planned route to a user cannot be conceived of.

After a large quantity of creative efforts, the inventor of the present invention provides a solution for generating travel plan evaluation information: first, for each travel planned route in at least one travel planned route from a start point to an end point of a user, determining at least one evaluation object on the travel planned route; then for each evaluation object therein, according to a predetermined comfort consideration parameter set corresponding to the evaluation object, obtaining evaluation information of each comfort consideration parameter in the comfort consideration parameter set, and further generating comprehensive comfort evaluation information of the evaluation object, and finally, presenting comfort evaluation information of the at least one evaluation object along with the travel planned route.

To make the object, technical solutions, and advantages of the present invention clearer, the present invention is further described below in detail with reference to embodiments.

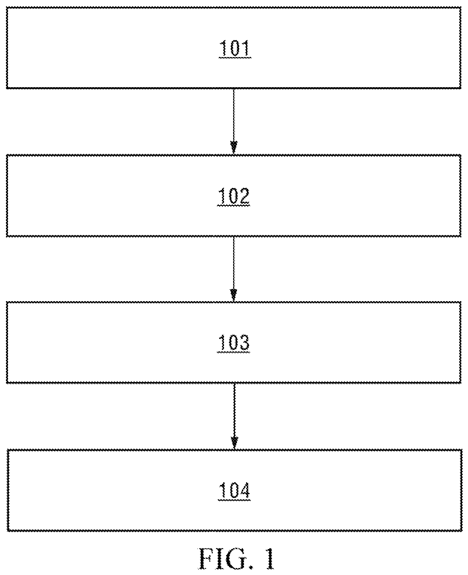

FIG. 1 is an exemplary flowchart of a method for generating travel plan evaluation information according to an embodiment of the present invention. As shown in FIG. 1, the method may include the following procedures.

Step 101: For each travel planned route in at least one travel planned route from a start point to an end point of a user, determine at least one evaluation object on the travel planned route.

In actual application, there is usually more than one travel planned route from a start point to an end point of a user. To evaluate and compare the travel planned routes, in this embodiment, an evaluation object of each travel planned route is first determined. There may be one or more evaluation objects. For example, the evaluation objects may include various transportation means involved in the travel planned route, and may further include peripheral supporting or related facilities, such as service areas, board and lodging facilitates, and surrounding scenic spots.

Step 102: For each evaluation object in the at least one evaluation object, determine a comfort consideration parameter set corresponding to the evaluation object.

In this step, different evaluation objects may have different comfort consideration parameter sets. For example, a first evaluation object may have a comfort consideration parameter set including 9 comfort consideration parameters in total: A, B, C, D, E, F, G, H, and I, and a second evaluation object may have a comfort consideration parameter set including 8 comfort consideration parameters in total: C, D, E, F, G, H, I, and J, and so on. Therefore, in this step, a comfort consideration parameter set corresponding to each evaluation object may be first determined. In addition, comfort consideration parameters in each comfort consideration parameter set may be divided into different parameter evaluation types, and each parameter evaluation type may include at least one comfort consideration parameter. Certainly, the comfort consideration parameters in the comfort consideration parameter set may not be divided into types.

For example, when the evaluation object is a transportation means, the comfort consideration parameter set for a transportation means may include evaluation types such as timeliness related parameters, convenience related parameters, and caring related parameters. The timeliness related parameters may include a road condition and/or whether congestion can be avoided, a punctuality rate and/or whether there are frequent delays, a walking distance and/or transfer convenience, and the like. The convenience related parameters may include passenger density and/or whether there is a vacant seat, whether there is a luggage position, whether there is WIFI, and the like. The caring related parameters may include an indoor air status and/or whether there is an air conditioner, an AQI, whether there is a priority seat, and the like. In addition, the comfort consideration parameter set may further include evaluation types of supporting related parameters throughout the journey, such as the number of service areas, whether board and lodging are convenient, and which scenic spots are around.

The passenger density and/or whether there is a vacant seat are used to indicate whether there is congestion, and whether there are possible seats for newly added passengers. The indoor air status and/or whether there is an air conditioner are used to indicate a possible internal temperature, to facilitate learning of old passengers, passengers with children, and passengers having special requirements. The road condition and/or whether congestion can be avoided are used for selecting an optimal route among various travel planned routes by a user, because few people like the feeling of getting stuck in a traffic jam. The punctuality rate and/or whether there are frequent delays are used to indicate operating conditions of the transportation means based on historical data, that is, whether the transportation means is on time in most cases, whether there are frequency delays, or the like, so that a user can select a suitable traffic route according to weather conditions during the travel. The walking distance and/or transfer convenience are used to indicate time of walking for transfer of the transportation means to a user, and most users do not hope to select transfer that needs relatively long walking time. Currently, people, in particular, young people, or people that need to work online during the journey have increasing demands for surfing the Internet, and therefore whether there is WIFI has become an important measurable indicator. The indicator of whether there is a luggage position may help passengers with relatively much luggage select a transportation means suitable for the passengers, and may also help passengers learn a restriction requirement for the amount of luggage that a passenger can carry on the transportation means. The AQI may help a user consider whether to prepare an air filtering device, such as a mask, in road segments where there is air pollution. For a long journey, AQI values of different road segments may differ. Whether there is a priority seat is used to help passengers having special requirements, such as passengers with infants, weak passengers, disabled passengers, or old passengers learn in advance.

In addition, when the evaluation object is a service area, comfort consideration parameters thereof may include a level of the service area, which facilities are equipped, whether there is crowd congestion, and the like. When the evaluation object is board and lodging facilitates, comfort consideration parameters thereof may include a level, a price, supporting services, and the like of accommodation. When the evaluation object is a scenic spot, comfort consideration parameters thereof may include a distance, traffic convenience, crowd conditions, and the like of the scenic spot.

Step 103: According to the determined comfort consideration parameter set, obtain evaluation information of each comfort consideration parameter in the comfort consideration parameter set.

In this step, when evaluation information of each comfort consideration parameter in the comfort consideration parameter set is obtained, a communications connection may be established with discrete branches or areas where a service represented by the comfort consideration parameter of the evaluation object and the evaluation information of the corresponding comfort consideration parameter of the evaluation object is obtained by means of the communications connection. In addition, for evaluation on some comfort consideration parameters with relatively strong subjectivity, evaluation information of users may also be collected by establishing a corresponding evaluation channel, and after the collected evaluation information is analyzed and summarized, evaluation information corresponding to the comfort consideration parameter of the evaluation object is obtained.

For example, with respect to evaluation information about the passenger density and/or whether is a vacant seat, in consideration of the fact that a camera is usually installed on a corresponding evaluation object, the evaluation information of the parameter may be obtained by analyzing picture or video data of the evaluation object, for example, may be obtained by means of analysis by using a computer video technology, such as OpenCV or obtained by means of analysis by using big data technologies similar to neural networks.

Evaluation information about the indoor air status and/or whether there is an air conditioner may be obtained from a public transportation operation organization, or obtained by collecting passenger feedbacks by using a mobile network. Supposing a Siemens Internet of Things (IoT) platform assembly is installed on a current transportation means, the foregoing information may also be directly obtained from the transportation means.

Evaluation information about the road condition and/or whether congestion can be avoided may be obtained from some map navigation information, such as navigation information of Baidu Map and Amap.

With respect to evaluation information about the punctuality rate and/or whether there are frequent delays, in consideration of the fact that estimated time of arrival of a transportation means is listed on a platform display board of each transportation means, the evaluation information may be obtained from database statistics of a public transportation operation system, or may also be obtained from statistics of collected feedback information of users for the transportation means.

Evaluation information about the walking distance and/or transfer convenience may also be obtained from some navigation tools, such as Baidu Map and Amap.

Evaluation information about whether there is WIFI may be obtained from an operating company.

Evaluation information about whether there is a luggage position may be provided by the operating company or passengers.

The AQI may be obtained from a weather forecast system, or may also be obtained from city boxes (ECBs) installed at intersections in cities where CMS projects are installed.

Evaluation information about whether there is a priority seat may be obtained from the operating company.

In addition to the foregoing listed obtaining ways, there may be other existing or newly added various ways in the future to collect evaluation information of each comfort consideration parameter in the comfort consideration parameter set of the current evaluation object, and details are not described herein again.

Step 104: Generate comfort evaluation information of the evaluation object according to the evaluation information of each comfort consideration parameter in the comfort consideration parameter set.

In this step, comfort evaluation information of the current evaluation object may be displayed item by item in a form of a list and/or a chart, or comprehensive text description may be provided for the comfort evaluation information of the current evaluation object.

For example, when the foregoing evaluation object is still a transportation means, it is assumed that evaluation information of each comfort consideration parameter in a comfort consideration parameter set of the transportation means is represented by a Boolean value, T represents that the transportation means supports a service represented by the comfort consideration parameter or positive evaluation for the service, and F represents that the transportation means does not support the service represented by the comfort consideration parameter or negative evaluation for the service. Supposing obtained evaluation information results of the comfort consideration parameters in the foregoing three listed parameter evaluation types are shown in the following Table 1,

**Table 1**

| Timeliness related parameters | Convenience related parameters | Caring related parameters |
|---|---|---|
| Whether congestion can be avoided (T) | Whether there is a vacant seat (T) | Whether there is an air conditioner (F) |
| Punctuality rate (F) | Whether there is a luggage position (T) | AQI (F) |
| Transfer convenience (T) | Whether there is WIFI (T) | Whether there is a priority seat (F) |

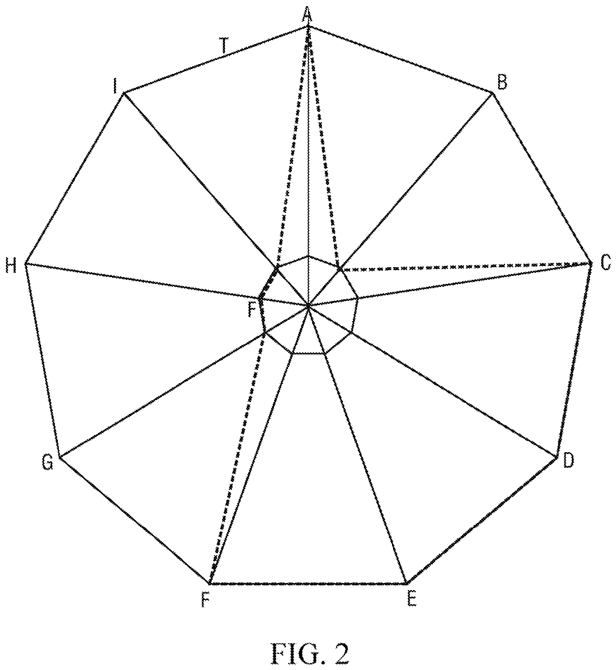

for the evaluation information of the comfort consideration parameters of the current evaluation object shown in the foregoing Table 1, comfort evaluation information of the current evaluation object may be directly represented in the form of the chart shown in Table 1. Alternatively, to display the comfort evaluation information of the current evaluation object more intuitively, a net-shaped chart may be predetermined. The net-shaped chart includes a plurality of line segments radiating from a center to an outer edge. Different line segments represent different comfort consideration parameters. A value of each line segment close to a central side is F, and a value of each line segment close to an edge side is T. For the evaluation information of the comfort consideration parameters of the current evaluation object shown in Table 1, a curve connecting Boolean value evaluation results of the comfort consideration parameters may further be generated, as shown in FIG. 2. In FIG. 2, A represents whether congestion can be avoided, B represents the punctuality rate, C represents the transfer convenience, D represents whether there is a vacant seat, E represents whether there is a luggage position, F represents whether there is WIFI, G represents whether there is an air conditioner, H represents the AQI, and I represents whether there is a priority seat.

For another example, when the foregoing evaluation object is still a transportation means, it is assumed that evaluation information of each comfort consideration parameter in a comfort consideration parameter set of the transportation means is represented by a value within [S, Z], S is a lower limit value of a preset reference interval and may be a positive number or a negative number, Z is an upper limit value of the preset reference interval and generally is a positive number, different values represent evaluation degrees for a service represented by the comfort consideration parameter, and a larger value indicates higher positive evaluation, and vice versa.

Supposing a value of S is -2.0, a value of Z is 10.0, and obtained evaluation information results of the comfort consideration parameters in the foregoing three listed parameter evaluation types are shown in the following Table 2,

**Table 2**

| Timeliness related parameters | Convenience related parameters | Caring related parameters |
|---|---|---|
| Whether congestion can be | Whether there is a vacant | Whether there is an air |
| avoided (9.0) | seat (9.0) | conditioner (5.0) |
| Punctuality rate (6.0) | Whether there is a luggage position (2.0) | AQI (4.0) |
| Transfer convenience (8.0) | Whether there is WIFI (3.0) | Whether there is a priority seat (7.0) |

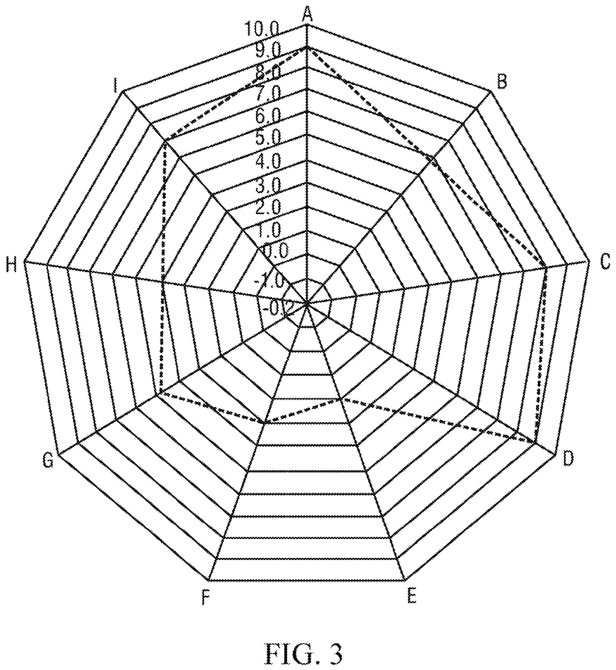

for the evaluation information of the comfort consideration parameters of the current evaluation object shown in the foregoing Table 2, comfort evaluation information of the current evaluation object may be directly represented in the form of the chart shown in Table 2. Alternatively, to display the comfort evaluation information of the current evaluation object more intuitively, a net-shaped chart may also be predetermined. The net-shaped chart includes a plurality of line segments radiating from a center to an outer edge. Different line segments represent different comfort consideration parameters. A value of each line segment close to a central side is S, and a value of each line segment close to an edge side is Z. Different positions in the middle correspond to different values, and the values gradually increase from the center to the edge. For the evaluation information of the comfort consideration parameters of the current evaluation object shown in Table 2, a curve connecting value evaluation results of the comfort consideration parameters may further be generated, as shown in FIG. 3.

To indicate a condition of each parameter evaluation type more directly, line segments corresponding to comfort consideration parameters of a same parameter evaluation type may be disposed at adjacent positions in the net-shaped charts shown in FIG. 2 and FIG. 3.

In addition, there may be other indication ways, which are not listed one by one herein.

Subsequently, the comfort evaluation information of the at least one evaluation object may be presented along with the travel planned route, to facilitate making choices among different travel planned routes by users according to requirements. There may be multiple specific presenting methods. For example, various travel planned routes may be displayed one by one in a manner of a list, and the comfort evaluation information of the at least one evaluation object is used as an entry of a travel planned route corresponding thereto for display; alternatively, various travel planned routes may also be displayed in a manner of text, and the comfort evaluation information of at least one evaluation object corresponding to the travel planned route is listed below each travel planned route.

The method for generating travel plan evaluation information in this embodiment of the present invention is described above in detail, and an apparatus capable of implementing the foregoing method in an embodiment of the present invention is described below in detail. Refer to corresponding description in the foregoing method embodiment for details that are not disclosed in the apparatus embodiment of the present invention.

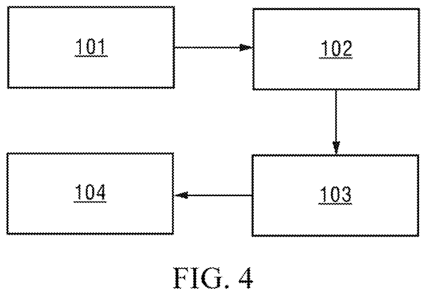

FIG. 4 is an exemplary structural diagram of an apparatus for generating travel plan evaluation information according to an embodiment of the present invention. As shown in FIG. 4, the apparatus may include: an evaluation object determining unit 401, a consideration parameter set determining unit 402, an evaluation information obtaining unit 403, and a comprehensive evaluation unit 404.

The evaluation object determining unit 401 is configured to: for each travel planned route in at least one travel planned route from a start point to an end point of a user, determine at least one evaluation object on the travel planned route.

The consideration parameter set determining unit 402 is configured to: for each evaluation object in the at least one evaluation object, determine a comfort consideration parameter set corresponding to the evaluation object.

The evaluation information obtaining unit 403 is configured to: according to the comfort consideration parameter set that corresponds to the evaluation object and is determined by the consideration parameter set determining unit 402, obtain evaluation information of each comfort consideration parameter in the comfort consideration parameter set.

The comprehensive evaluation unit 404 is configured to generate comfort evaluation information of the evaluation object according to the evaluation information of each comfort consideration parameter in the comfort consideration parameter set.

In addition, the present apparatus may further include a display unit (not shown in the figure), configured to present the comfort evaluation information of the at least one evaluation object along with the travel planned route.

In an implementation, the at least one evaluation object determined by the evaluation object determining unit 401 may include a transportation means; and the comfort consideration parameter set that corresponds to the transportation means and is determined by the consideration parameter set determining unit 402 may include parameter evaluation types such as timeliness related parameters, convenience related parameters, and caring related parameters. The timeliness related parameters may include a road condition and/or whether congestion can be avoided, a punctuality rate and/or whether there are frequent delays, a walking distance and/or transfer convenience, and the like. The convenience related parameters may include passenger density and/or whether there is a vacant seat, whether there is a luggage position, whether there is WIFI, and the like. The caring related parameters may include an indoor air status and/or whether there is an air conditioner, an AQI, whether there is a priority seat, and the like. In addition, the comfort consideration parameter set may further include evaluation types of supporting related parameters throughout the journey, such as the number of service areas, whether board and lodging are convenient, and which scenic spots are around.

In an implementation, the evaluation information that is of each comfort consideration parameter in the comfort consideration parameter set and that is obtained by the evaluation information obtaining unit 403 may be represented by a Boolean value, and T represents that the transportation means supports a service represented by the comfort consideration parameter or positive evaluation for the service, and F represents that the transportation means does not support the service represented by the comfort consideration parameter or negative evaluation for the service. Correspondingly, the comprehensive evaluation unit 404 may directly display the evaluation information of the comfort consideration parameters indicated in a form of a table, or may also predetermine a net-shaped chart. The net-shaped chart includes a plurality of line segments radiating from a center to an outer edge. Different line segments represent different comfort consideration parameters, and a value of each line segment close to a central side is F, and a value of each line segment close to an edge side is T. Subsequently, according to a Boolean value evaluation result of each comfort consideration parameter in the comfort consideration parameter set, a curve connecting the Boolean value evaluation results of the comfort consideration parameters is generated in the net-shaped chart.

In another implementation, the evaluation information that is of each comfort consideration parameter in the comfort consideration parameter set and that is obtained by the evaluation information obtaining unit 403 may also be represented by a value within [S, Z]. S is a lower limit value of a preset reference interval. Z is an upper limit value of the preset reference interval. Different values represent evaluation degrees for a service represented by the comfort consideration parameter. Correspondingly, the comprehensive evaluation unit 404 may directly display the evaluation information of the comfort consideration parameters indicated in a form of a table, or may also predetermine a net-shaped chart. The net-shaped chart includes a plurality of line segments radiating from a center to an outer edge. Different line segments represent different comfort consideration parameters. A value of each line segment close to a central side is S, and a value of each line segment close to an edge side is Z. Different positions in the middle correspond to different values, and the values gradually increase from the center to the edge. According to a value evaluation result of each comfort consideration parameter in the comfort consideration parameter set, a curve connecting the value evaluation results of the comfort consideration parameters is generated in the net-shaped chart.

In addition, to indicate a condition of each parameter evaluation type more directly, line segments corresponding to comfort consideration parameters of a same parameter evaluation type may also be disposed at adjacent positions in the net-shaped charts shown in FIG. 2 and FIG. 3.

The present invention further provides a computer readable storage medium, which stores an instruction used to enable a computer to execute the method for generating travel plan evaluation information according to this text. Specifically, a system or an apparatus equipped with a storage medium may be provided, and a soft program code that implements the function of any one of the foregoing embodiments is stored in the storage medium, and a computer (a CPU or an MPU) of the system or apparatus is enabled to read and execute the program code stored in the storage medium.

In this case, the program code itself read from the storage medium may implement the function of any one of the foregoing embodiments, and therefore, the program code and the storage medium storing the program code constitute a part of the present invention.

Embodiments of the storage medium used to provide the program code include a floppy disk, a hard disk, a magneto-optical disk, a compact disc (such as a CD-ROM, a CD-R, a CD-RW, a DVD-ROM, a DVD-RAM, a DVD-RW, and a DVD+RW), a tape, a non-volatile memory card, an ROM, a PC, a mobile phone, various intelligent devices, and the like. Optionally, the program code may be downloaded from a server computer by a communications network.

In addition, it should be clear that the function of any one of the foregoing embodiments may be implemented not only by executing the program code read by the computer, but also by enabling, by using an instruction based on the program code, an operating system operated on the computer, and the like to complete some or all of actual applications.

In addition, it can be understood that the program code read by the storage medium is written into a memory disposed in an expansion board inserted into the computer, or into a memory disposed in an expansion unit connected to the computer, and subsequently, a CPU and the like installed on the expansion board or the expansion unit are enabled, by using the instruction based on the program code, to execute some or all of actual applications, so as to implement the function of any one of the foregoing embodiments.

The foregoing descriptions are merely preferred embodiments of the present invention, and are not intended to limit the present invention.

## Claims

1. A method for generating travel plan evaluation information using a computer, comprising:
for each travel planned route in at least one travel planned route from a start point to an end point of a user, determining at least one evaluation object on the travel planned route (101);
for each evaluation object in the at least one evaluation object, determining a comfort consideration parameter set corresponding to the evaluation object (102);
according to the determined comfort consideration parameter set, obtaining evaluation information of each comfort consideration parameter in the comfort consideration parameter set (103), wherein the evaluation information of each comfort consideration parameter is obtained by establishing a communication connection with discrete branches or areas,
wherein the step of obtaining evaluation information of each comfort consideration parameter in the comfort consideration parameter set comprises collecting, by establishing a corresponding evaluation channel, the evaluation information of users and obtaining evaluation information corresponding to one or more comfort consideration parameter of the evaluation by analyzing and summarizing the collected evaluation information; and
generating comfort evaluation information of the evaluation object according to the evaluation information of each comfort consideration parameter in the comfort consideration parameter set (104),
displaying, on a display unit, item by item the comfort evaluation information of a current evaluation object using a net-shaped chart,
wherein the at least one evaluation object comprises a transportation means, and the comfort consideration parameter set corresponding to the transportation means comprises all or some of the following parameter evaluation types: convenience related parameters, caring related parameters, and timeliness related parameters,
and
wherein the convenience related parameters comprise all or some of the following parameters:
passenger density and/or whether there is a vacant seat, obtained by analyzing picture or video data of the evaluation object;
whether there is a luggage position, obtained from an operating company; and
whether there is WIFI, obtained from an operating company;
wherein the caring related parameters comprise all or some of the following parameters:
an indoor air status and/or whether there is an air conditioner, obtained from a public transportation operation organization or by collecting passenger feedbacks by using a mobile network;
an air quality index, AQI, obtained from a weather forecast system; and
whether there is a priority seat, obtained from an operating company; and
wherein the timeliness related parameters comprise all or some of the following parameters:
a road condition and/or whether congestion can be avoided, obtained from a map navigation information;
a punctuality rate and/or whether there are frequent delays, obtained from database statistics of a public transportation operation system or from feedback information obtained by users of the public transportation means; and
a walking distance and/or transfer convenience, obtained from a map navigation information.

2. The method for generating travel plan evaluation information according to claim 1, wherein the generating comfort evaluation information of the evaluation object according to the evaluation information of each comfort consideration parameter in the comfort consideration parameter set comprises:
generating a comfort evaluation list and/or chart and/or text description of the evaluation object according to the evaluation information of each comfort consideration parameter in the comfort consideration parameter set.

3. The method for generating travel plan evaluation information according to claim 2, wherein the evaluation information of each comfort consideration parameter in the comfort consideration parameter set is represented by a Boolean value, and T represents that the transportation means supports a service represented by the comfort consideration parameter or positive evaluation for the service, and F represents that the transportation means does not support the service represented by the comfort consideration parameter or negative evaluation for the service;
the generating a comfort evaluation list and/or chart of the evaluation object according to the evaluation information of each comfort consideration parameter in the comfort consideration parameter set comprises:
predetermining the net-shaped chart, wherein the net-shaped chart comprises a plurality of line segments radiating from a center to an outer edge, different line segments represent different comfort consideration parameters, and a value of each line segment close to a central side is F, and a value of each line segment close to an edge side is T; and
according to a Boolean value evaluation result of each comfort consideration parameter in the comfort consideration parameter set, generating, in the net-shaped chart, a curve connecting the Boolean value evaluation results of the comfort consideration parameters.

4. The method for generating travel plan evaluation information according to claim 2, wherein the evaluation information of each comfort consideration parameter in the comfort consideration parameter set is represented by a value within [S, Z], S is a lower limit value of a preset reference interval, Z is an upper limit value of the preset reference interval, and different values represent evaluation degrees for a service represented by the comfort consideration parameter;
the generating a comfort evaluation list and/or chart of the evaluation object according to the evaluation information of each comfort consideration parameter in the comfort consideration parameter set comprises:
predetermining the net-shaped chart, wherein the net-shaped chart comprises a plurality of line segments radiating from a center to an outer edge, different line segments represent different comfort consideration parameters, a value of each line segment close to a central side is S, and a value of each line segment close to an edge side is Z, different positions in the middle correspond to different values, and the values gradually increase from the center to the edge; and
according to a value evaluation result of each comfort consideration parameter in the comfort consideration parameter set, generating, in the net-shaped chart, a curve connecting the value evaluation results of the comfort consideration parameters.

5. The method for generating travel plan evaluation information according to claim 3 or 4, wherein the comfort consideration parameters are divided into different parameter evaluation types, and line segments corresponding to comfort consideration parameters of a same parameter evaluation type located at adjacent positions in the net-shaped chart.

6. An apparatus for generating travel plan evaluation information, comprising:
an evaluation object determining unit (401), configured to: for each travel planned route in at least one travel planned route from a start point to an end point of a user, determine at least one evaluation object on the travel planned route;
a consideration parameter set determining unit (402), configured to: for each evaluation object in the at least one evaluation object, determine a comfort consideration parameter set corresponding to the evaluation object;
an evaluation information obtaining unit (403), configured to: according to the comfort consideration parameter set that corresponds to the evaluation object and is determined by the consideration parameter set determining unit (402), obtain evaluation information of each comfort consideration parameter in the comfort consideration parameter set, wherein the evaluation information of each comfort consideration parameter is obtained by establishing a communication connection with discrete branches or areas,
wherein evaluation information obtaining unit (403) is configured to collect, by establishing a corresponding evaluation channel, the evaluation information of users and obtaining evaluation information corresponding to one or more comfort consideration parameter of the evaluation; and
a comprehensive evaluation unit (404), configured to generate comfort evaluation information of the evaluation object according to the evaluation information of each comfort consideration parameter in the comfort consideration parameter set,
a display unit configured to display item by item the comfort evaluation information of a current evaluation object,
wherein the at least one evaluation object determined by the evaluation object determining unit (401) comprises a transportation means; and
the comfort consideration parameter set that corresponds to the transportation means and is determined by the consideration parameter set determining unit (402) comprises all or some of timeliness related parameters, convenience related parameters, and caring related parameters, and
wherein the convenience related parameters comprise all or some of the following parameters:
passenger density and/or whether there is a vacant seat, obtained by analyzing picture or video data of the evaluation object;
whether there is a luggage position, obtained from an operating company; and
whether there is WIFI, obtained from an operating company;
wherein the caring related parameters comprise all or some of the following parameters:
an indoor air status and/or whether there is an air conditioner, obtained from a public transportation operation organization or by collecting passenger feedbacks by using a mobile network;
an air quality index, AQI, obtained from a weather forecast system; and
whether there is a priority seat, obtained from an operating company; and
wherein the timeliness related parameters comprise all or some of the following parameters:
a road condition and/or whether congestion can be avoided, obtained from a map navigation information;
a punctuality rate and/or whether there are frequent delays, obtained from database statistics of a public transportation operation system or from feedback information obtained by users of the public transportation means; and
a walking distance and/or transfer convenience, obtained from a map navigation information.

7. The apparatus for generating travel plan evaluation information according to claim 6, wherein the evaluation information that is of each comfort consideration parameter in the comfort consideration parameter set and that is obtained by the evaluation information obtaining unit (403) is represented by a Boolean value, and T represents that the transportation means supports a service represented by the comfort consideration parameter or positive evaluation for the service, and F represents that the transportation means does not support the service represented by the comfort consideration parameter or negative evaluation for the service; and
the comprehensive evaluation unit (404) predetermines the net-shaped chart, wherein the net-shaped chart comprises a plurality of line segments radiating from a center to an outer edge, different line segments represent different comfort consideration parameters, and a value of each line segment close to a central side is F, and a value of each line segment close to an edge side is T; and according to a Boolean value evaluation result of each comfort consideration parameter in the comfort consideration parameter set, a curve connecting the Boolean value evaluation results of the comfort consideration parameters is generated in the net-shaped chart.

8. The apparatus for generating travel plan evaluation information according to claim 6, wherein the evaluation information that is of each comfort consideration parameter in the comfort consideration parameter set and that is obtained by the evaluation information obtaining unit (403) is represented by a value within [S, Z], S is a lower limit value of a preset reference interval, Z is an upper limit value of the preset reference interval, and different values represent evaluation degrees for a service represented by the comfort consideration parameter; and
the comprehensive evaluation unit (404) predetermines the net-shaped chart, wherein the net-shaped chart comprises a plurality of line segments radiating from a center to an outer edge, different line segments represent different comfort consideration parameters, a value of each line segment close to a central side is S, and a value of each line segment close to an edge side is Z, different positions in the middle correspond to different values, and the values gradually increase from the center to the edge; and according to a value evaluation result of each comfort consideration parameter in the comfort consideration parameter set, a curve connecting the value evaluation results of the comfort consideration parameters is generated in the net-shaped chart.

9. A computer readable storage medium, storing a computer program, wherein when the computer program is executed by a processor, steps of the method for generating travel plan evaluation information according to any one of claims 1 to 5 are implemented.

## Patentansprüche

1. Verfahren zur Erzeugung von Informationen zur Beurteilung eines Reiseplans unter Verwendung eines Computers, umfassend:
für jede Reiseplanroute in mindestens einer Reiseplanroute von einem Startpunkt zu einem Endpunkt eines Benutzers das Bestimmen von mindestens einem Beurteilungsobjekt auf der Reiseplanroute (101);
für jedes Beurteilungsobjekt in dem mindestens einen Beurteilungsobjekt das Bestimmen eines Komfortberücksichtigungsparametersatzes, der dem Beurteilungsobjekt entspricht (102);
gemäß dem bestimmten Komfortberücksichtigungsparametersatz das Erhalten von Beurteilungsinformationen zu jedem Komfortberücksichtigungsparameter in dem Komfortberücksichtigungsparametersatz (103), wobei die Beurteilungsinformationen zu jedem Komfortberücksichtigungsparameter durch Aufbau einer Kommunikationsverbindung mit diskreten Zweigstellen oder Bereichen erhalten werden,
wobei der Schritt des Erhaltens von Beurteilungsinformationen zu jedem Komfortberücksichtigungsparameter in dem Komfortberücksichtigungsparametersatz das Erfassen von Beurteilungsinformationen von Benutzern durch Aufbau eines entsprechenden Beurteilungskanals und das Erhalten von Beurteilungsinformationen zu einem oder mehreren Komfortberücksichtigungsparametern der Beurteilung durch Analyse und Zusammenfassung der erfassten Beurteilungsinformationen umfasst; und
das Erzeugen von Komfortbeurteilungsinformationen des Beurteilungsobjekts gemäß den Beurteilungsinformationen zu jedem Komfortberücksichtigungsparameter in dem Komfortberücksichtigungsparametersatz (104),
das Anzeigen der Komfortbeurteilungsinformationen eines aktuellen Beurteilungsobjekts auf einer Anzeigeeinheit Punkt für Punkt unter Verwendung eines netzförmigen Diagramms,
wobei das mindestens eine Beurteilungsobjekt ein Transportmittel umfasst und der dem Transportmittel entsprechende Komfortberücksichtigungsparametersatz alle oder einige der folgenden Parameterbeurteilungstypen umfasst:
annehmlichkeitsbezogene Parameter, wohlbefindlichkeitsbezogene Parameter und pünktlichkeitsbezogene Parameter, und
wobei die annehmlichkeitsbezogenen Parameter alle oder einige der folgenden Parameter umfassen:
eine Passagierdichte und/oder ob ein freier Sitzplatz vorhanden ist, erhalten durch Analyse von Bild- oder Videodaten des Beurteilungsobjekts;
ob eine Gepäckposition vorhanden ist, erhalten von einem Betreiberunternehmen; und
ob WLAN vorhanden ist, erhalten von einem Betreiberunternehmen; wobei die wohlbefindlichkeitsbezogenen Parameter alle oder einige der folgenden Parameter umfassen:
einen Raumluftstatus und/oder ob eine Klimaanlage vorhanden ist, erhalten von einer öffentlichen Verkehrsbetriebsorganisation oder durch Sammeln von Passagierrückmeldungen über ein mobiles Netzwerk;
einen Luftqualitätsindex, AQI, erhalten von einem Wettervorhersagesystem; und
ob ein bevorzugter Sitzplatz vorhanden ist, erhalten von einem Betreiberunternehmen; und
wobei die pünktlichkeitsbezogenen Parameter alle oder einige der folgenden Parameter umfassen:
einen Straßenzustand und/oder ob Staus vermieden werden können, erhalten aus Navigationsinformationen einer Karte;
eine Pünktlichkeitsrate und/oder ob häufige Verspätungen auftreten, erhalten aus Datenbankstatistiken eines öffentlichen Verkehrsbetriebssystems oder aus von Benutzern des öffentlichen Verkehrsmittels erhaltenen Rückmeldeinformationen; und
eine Gehstrecke und/oder ein Umsteigekomfort, erhalten aus Kartennavigationsinformationen.

2. Verfahren zur Erzeugung von Informationen zur Beurteilung eines Reiseplans nach Anspruch 1, wobei das Erzeugen von Komfortbeurteilungsinformationen des Beurteilungsobjekts gemäß den Beurteilungsinformationen zu jedem Komfortberücksichtigungsparameter in dem Komfortberücksichtigungsparametersatz Folgendes umfasst:
das Erzeugen einer Komfortbeurteilungsliste und/oder eines Diagramms und/oder einer Textbeschreibung des Beurteilungsobjekts gemäß den Beurteilungsinformationen zu jedem Komfortberücksichtigungsparameter in dem Komfortberücksichtigungsparametersatz.

3. Verfahren zur Erzeugung von Informationen zur Beurteilung eines Reiseplans nach Anspruch 2, wobei die Beurteilungsinformationen zu jedem Komfortberücksichtigungsparameter in dem Komfortberücksichtigungsparametersatz durch einen Booleschen Wert dargestellt sind und T angibt, dass das Transportmittel einen durch den Komfortberücksichtigungsparameter dargestellten Dienst unterstützt oder eine positive Beurteilung für den Dienst vorliegt, und F angibt, dass das Transportmittel den durch den Komfortberücksichtigungsparameter dargestellten Dienst nicht unterstützt oder eine negative Beurteilung für den Dienst vorliegt;
das Erzeugen einer Komfortbeurteilungsliste und/oder eines Diagramms des Beurteilungsobjekts gemäß den Beurteilungsinformationen zu jedem Komfortberücksichtigungsparameter in dem Komfortberücksichtigungsparametersatz umfasst:
das Vorbestimmen des netzförmigen Diagramms, wobei das netzförmige Diagramm eine Vielzahl von sich von einem Mittelpunkt zu einem Außenrand erstreckenden Liniensegmenten umfasst, wobei unterschiedliche Liniensegmente unterschiedliche Komfortberücksichtigungsparameter darstellen und ein Wert eines jeden Liniensegments nahe der Mittelbereichsseite F ist und ein Wert eines jeden Liniensegments nahe der Randbereichsseite T ist; und
gemäß einem Booleschen Wertbeurteilungsergebnis eines jeden Komfortberücksichtigungsparameters in dem Komfortberücksichtigungsparametersatz das Erzeugen einer Kurve in dem netzförmigen Diagramm, die die Booleschen Wertbeurteilungsergebnisse der Komfortberücksichtigungsparameter miteinander verbindet.

4. Verfahren zur Erzeugung von Informationen zur Beurteilung eines Reiseplans nach Anspruch 2, wobei die Beurteilungsinformationen zu jedem Komfortberücksichtigungsparameter in dem Komfortberücksichtigungsparametersatz durch einen Wert innerhalb eines Bereichs [S, Z] dargestellt sind, S einen unteren Grenzwert eines voreingestellten Referenzintervalls darstellt, Z einen oberen Grenzwert des voreingestellten Referenzintervalls darstellt, und unterschiedliche Werte Beurteilungsgrade für einen durch den Komfortberücksichtigungsparameter dargestellten Dienst darstellen;
das Erzeugen einer Komfortbeurteilungsliste und/oder eines Diagramms des Beurteilungsobjekts gemäß den Beurteilungsinformationen zu jedem Komfortberücksichtigungsparameter in dem Komfortberücksichtigungsparametersatz umfasst:
das Vorbestimmen des netzförmigen Diagramms, wobei das netzförmige Diagramm eine Vielzahl von sich von einem Mittelpunkt zu einem Außenrand erstreckenden Liniensegmenten umfasst, wobei unterschiedliche Liniensegmente unterschiedliche Komfortberücksichtigungsparameter darstellen, ein Wert eines jeden Liniensegments nahe der Mittelbereichsseite S ist, ein Wert eines jeden Liniensegments nahe der Randbereichsseite Z ist, unterschiedliche Positionen dazwischen unterschiedlichen Werten entsprechen und die Werte vom Mittelpunkt zum Rand hin allmählich ansteigen; und
gemäß einem Wertbeurteilungsergebnis eines jeden Komfortberücksichtigungsparameters in dem Komfortberücksichtigungsparametersatz das Erzeugen einer Kurve in dem netzförmigen Diagramm, die die Wertbeurteilungsergebnisse der Komfortberücksichtigungsparameter miteinander verbindet.

5. Verfahren zur Erzeugung von Informationen zur Beurteilung eines Reiseplans nach Anspruch 3 oder 4, wobei die Komfortberücksichtigungsparameter in unterschiedliche Parameterbeurteilungstypen unterteilt sind und Liniensegmente, die Komfortberücksichtigungsparametern eines gleichen Parameterbeurteilungstyps entsprechen, im netzförmigen Diagramm an benachbarten Positionen angeordnet sind.

6. Vorrichtung zur Erzeugung von Informationen zur Beurteilung eines Reiseplans, umfassend:
eine Beurteilungsobjektbestimmungseinheit (401), die dazu ausgelegt ist: für jede Reiseplanroute in mindestens einer Reiseplanroute von einem Startpunkt zu einem Endpunkt eines Benutzers mindestens ein Beurteilungsobjekt auf der Reiseplanroute zu bestimmen;
eine Berücksichtigungsparametersatz-Bestimmungseinheit (402), die dazu ausgelegt ist: für jedes Beurteilungsobjekt in dem mindestens einen Beurteilungsobjekt einen dem Beurteilungsobjekt entsprechenden Komfortberücksichtigungsparametersatz zu bestimmen;
eine Beurteilungsinformationserfassungseinheit (403), die dazu ausgelegt ist: gemäß dem dem Beurteilungsobjekt entsprechenden und durch die Berücksichtigungsparametersatz-Bestimmungseinheit (402) bestimmten Komfortberücksichtigungsparametersatz Beurteilungsinformationen zu jedem Komfortberücksichtigungsparameter in dem Komfortberücksichtigungsparametersatz zu erfassen, wobei die Beurteilungsinformationen zu jedem Komfortberücksichtigungsparameter durch Aufbau einer Kommunikationsverbindung mit diskreten Zweigstellen oder Bereichen erhalten werden,
wobei die Beurteilungsinformationserfassungseinheit (403) dazu ausgelegt ist, durch Aufbau eines entsprechenden Beurteilungskanals Beurteilungsinformationen von Benutzern zu erfassen und Beurteilungsinformationen zu einem oder mehreren Komfortberücksichtigungsparametern der Beurteilung zu erhalten; und
eine Gesamtbeurteilungsseinheit (404), die dazu ausgelegt ist, Komfortbeurteilungsinformationen des Beurteilungsobjekts gemäß den Beurteilungsinformationen zu jedem Komfortberücksichtigungsparameter in dem Komfortberücksichtigungsparametersatz zu erzeugen,
eine Anzeigeeinheit, die dazu ausgelegt ist, die Komfortbeurteilungsinformationen eines aktuellen Beurteilungsobjekts Punkt für Punkt anzuzeigen,
wobei das durch die Beurteilungsobjektbestimmungseinheit (401) bestimmte mindestens eine Beurteilungsobjekt ein Transportmittel umfasst; und
der durch die Berücksichtigungsparametersatz-Bestimmungseinheit (402) bestimmte dem Transportmittel entsprechende Komfortberücksichtigungsparametersatz alle oder einige der folgenden Parameterbeurteilungstypen umfasst: pünktlichkeitsbezogene Parameter, annehmlichkeitsbezogene Parameter und wohlbefindlichkeitsbezogene Parameter, und
wobei die annehmlichkeitsbezogenen Parameter alle oder einige der folgenden Parameter umfassen:
eine Passagierdichte und/oder ob ein freier Sitzplatz vorhanden ist, erhalten durch Analyse von Bild- oder Videodaten des Beurteilungsobjekts;
ob eine Gepäckposition vorhanden ist, erhalten von einem Betreiberunternehmen; und
ob WLAN vorhanden ist, erhalten von einem Betreiberunternehmen; wobei die wohlbefindlichkeitsbezogenen Parameter alle oder einige der folgenden Parameter umfassen:
einen Raumluftstatus und/oder ob eine Klimaanlage vorhanden ist, erhalten von einer öffentlichen Verkehrsbetriebsorganisation oder durch Sammeln von Passagierrückmeldungen über ein mobiles Netzwerk;
einen Luftqualitätsindex, AQI, erhalten von einem Wettervorhersagesystem; und
ob ein bevorzugter Sitzplatz vorhanden ist, erhalten von einem Betreiberunternehmen; und
wobei die pünktlichkeitsbezogenen Parameter alle oder einige der folgenden Parameter umfassen:
einen Straßenzustand und/oder ob Staus vermieden werden können, erhalten aus Navigationsinformationen einer Karte;
eine Pünktlichkeitsrate und/oder ob häufige Verspätungen auftreten, erhalten aus Datenbankstatistiken eines öffentlichen Verkehrsbetriebssystems oder aus von Benutzern des öffentlichen Verkehrsmittels erhaltenen Rückmeldeinformationen; und
eine Gehstrecke und/oder ein Umsteigekomfort, erhalten aus Kartennavigationsinformationen.

7. Vorrichtung zur Erzeugung von Informationen zur Beurteilung eines Reiseplans nach Anspruch 6, wobei die durch die Beurteilungsinformationserfassungseinheit (403) erhaltenen Beurteilungsinformationen zu jedem Komfortberücksichtigungsparameter in dem Komfortberücksichtigungsparametersatz durch einen Booleschen Wert dargestellt sind, wobei T angibt, dass das Transportmittel einen durch den Komfortberücksichtigungsparameter dargestellten Dienst unterstützt oder eine positive Beurteilung für den Dienst vorliegt, und F angibt, dass das Transportmittel den durch den Komfortberücksichtigungsparameter dargestellten Dienst nicht unterstützt oder eine negative Beurteilung für den Dienst vorliegt; und
die Gesamtbeurteilungseinheit (404) ein netzförmiges Diagramm vorbestimmt, wobei das netzförmige Diagramm eine Vielzahl von sich von einem Mittelpunkt zu einem Außenrand erstreckenden Liniensegmenten umfasst, wobei unterschiedliche Liniensegmente unterschiedliche Komfortberücksichtigungsparameter darstellen und ein Wert eines jeden Liniensegments nahe der Mittelbereichsseite F ist und ein Wert eines jeden Liniensegments nahe der Randbereichsseite T ist; und gemäß einem Booleschen Wertbeurteilungsergebnis eines jeden Komfortberücksichtigungsparameters in dem Komfortberücksichtigungsparametersatz eine Kurve erzeugt wird, welche die Booleschen Wertbeurteilungsergebnisse der Komfortberücksichtigungsparameter in dem netzförmigen Diagramm miteinander verbindet.

8. Vorrichtung zur Erzeugung von Informationen zur Beurteilung eines Reiseplans nach Anspruch 6, wobei die durch die Beurteilungsinformationserfassungseinheit (403) erhaltenen Beurteilungsinformationen zu jedem Komfortberücksichtigungsparameter in dem Komfortberücksichtigungsparametersatz durch einen Wert innerhalb eines Bereichs [S, Z] dargestellt sind, wobei S einen unteren Grenzwert eines voreingestellten Referenzintervalls darstellt, Z einen oberen Grenzwert des voreingestellten Referenzintervalls darstellt und unterschiedliche Werte Beurteilungsgrade für einen durch den Komfortberücksichtigungsparameter dargestellten Dienst repräsentieren; und
die Gesamtbeurteilungsseinheit (404) ein netzförmiges Diagramm vorbestimmt, wobei das netzförmige Diagramm eine Vielzahl von sich von einem Mittelpunkt zu einem Außenrand erstreckenden Liniensegmenten umfasst, wobei unterschiedliche Liniensegmente unterschiedliche Komfortberücksichtigungsparameter darstellen, ein Wert eines jeden Liniensegments nahe der Mittelbereichsseite S ist und ein Wert eines jeden Liniensegments nahe der Randbereichsseite Z ist, unterschiedliche Positionen dazwischen unterschiedlichen Werten entsprechen und die Werte vom Mittelpunkt zum Rand hin allmählich ansteigen; und gemäß einem Wertbeurteilungsergebnis eines jeden Komfortberücksichtigungsparameters in dem Komfortberücksichtigungsparametersatz eine Kurve in dem netzförmigen Diagramm erzeugt wird, welche die Wertbeurteilungsergebnisse der Komfortberücksichtigungsparameter miteinander verbindet.

9. Computerlesbares Speichermedium, das ein Computerprogramm speichert, wobei, wenn das Computerprogramm von einem Prozessor ausgeführt wird, Schritte des Verfahrens zur Erzeugung von Informationen zur Beurteilung eines Reiseplans gemäß einem der Ansprüche 1 bis 5 implementiert werden.

## Revendications

1. Procédé de génération d'informations d'évaluation de plan de déplacement à l'aide d'un ordinateur, comprenant :
pour chaque itinéraire planifié de déplacement dans au moins un itinéraire planifié de déplacement d'un point de départ à un point de fin d'un usager, la détermination d'au moins un objet d'évaluation sur l'itinéraire planifié de déplacement (101) ;
pour chaque objet d'évaluation dans l'au moins un objet d'évaluation, la détermination d'un ensemble de paramètres de considération de confort correspondant à l'objet d'évaluation (102) ;
selon de l'ensemble de paramètres de considération de confort déterminé, l'obtention d'informations d'évaluation de chaque paramètre de considération de confort dans l'ensemble de paramètres de considération de confort (103), dans lequel les informations d'évaluation de chaque paramètre de considération de confort sont obtenues en établissant une connexion de communication avec des branches ou des zones discrètes,
dans lequel l'étape consistant à obtenir des informations d'évaluation de chaque paramètre de considération de confort dans l'ensemble de paramètres de considération de confort comprend la collecte, en établissant un canal d'évaluation correspondant, des informations d'évaluation d'usagers et l'obtention d'informations d'évaluation correspondant à un ou plusieurs paramètre(s) de considération de confort de l'évaluation en analysant et résumant les informations d'évaluation collectées ; et
la génération d'informations d'évaluation de confort de l'objet d'évaluation selon les informations d'évaluation de chaque paramètre de considération de confort dans l'ensemble de paramètres de considération de confort (104),
l'affichage, sur une unité d'affichage, élément par élément des informations d'évaluation de confort d'un objet d'évaluation actuel à l'aide d'un graphique en forme de filet,
dans lequel l'au moins un objet d'évaluation comprend un moyen de transport, et l'ensemble de paramètres de considération de confort correspondant au moyen de transport comprend tout ou partie des types d'évaluation de paramètres suivants : des paramètres liés à la commodité, des paramètres liés au soin, et des paramètres liés à la rapidité,
et
dans lequel les paramètres liés à la commodité comprennent tout ou partie des paramètres suivants :
densité de voyageurs et/ou s'il y a un siège libre, obtenu(s) en analysant des données d'image ou de vidéo de l'objet d'évaluation ;
s'il y a de la place pour les bagages, obtenu en provenance d'une société d'exploitation ; et
s'il y a la WIFI, obtenu en provenance d'une société d'exploitation ;
dans lequel les paramètres liés au soin comprennent tout ou partie des paramètres suivants :
un état d'air intérieur et/ou s'il y a un climatiseur, obtenu(s) en provenance d'une organisation d'exploitation de transport public ou en collectant des réactions de voyageurs à l'aide d'un réseau mobile ;
un indice de qualité d'air, AQI, obtenu en provenance d'un système de prévision météorologique ; et
s'il y un siège destiné en priorité aux personnes à mobilité réduite, obtenu en provenance d'une société d'exploitation ; et
dans lequel les paramètres liés à la rapidité comprennent tout ou partie des paramètres suivants :
une condition routière et/ou si un embouteillage peut/peuvent être évité(s), obtenu(s) en provenance d'informations de navigation cartographique ;
un taux de ponctualité et/ou s'il y a des retards fréquents, obtenu(s) en provenance de statistiques de base de données d'un système d'exploitation de transport public ou en provenance d'informations de réactions obtenues par des usagers du moyen de transport public ; et
une distance de marche et/ou une commodité de transfert, obtenu(s) en provenance d'informations de navigation cartographique.

2. Procédé de génération d'informations d'évaluation de plan de déplacement selon la revendication 1, dans lequel la génération d'informations d'évaluation de confort de l'objet d'évaluation selon les informations d'évaluation de chaque paramètre de considération de confort dans l'ensemble de paramètres de considération de confort comprend :
la génération d'une liste et/ou d'un graphique d'évaluation de confort et/ou d'une description textuelle de l'objet d'évaluation selon les informations d'évaluation de chaque paramètre de considération de confort dans l'ensemble de paramètres de considération de confort.

3. Procédé de génération d'informations d'évaluation de plan de déplacement selon la revendication 2, dans lequel les informations d'évaluation de chaque paramètre de considération de confort dans l'ensemble de paramètres de considération de confort sont représentées par une valeur booléenne, et T représente que le moyen de transport prend en charge un service représenté par le paramètre de considération de confort ou l'évaluation positive pour le service, et F représente que le moyen de transport ne prend pas en charge le service représenté par le paramètre de considération de confort ou l'évaluation négative pour le service ;
la génération d'une liste et/ou d'un graphique d'évaluation de confort de l'objet d'évaluation selon les informations d'évaluation de chaque paramètre de considération de confort dans l'ensemble de paramètres de considération de confort comprend :
la prédétermination du graphique en forme de filet, dans lequel le graphique en forme de filet comprend une pluralité de segments de ligne rayonnant depuis un centre vers un bord externe, différents segments de ligne représentent différents paramètres de considération de confort, et une valeur de chaque segment de ligne proche d'un côté central est F, et une valeur de chaque segment de ligne proche d'un côté de bord est T ; et
selon un résultat d'évaluation de valeur booléenne de chaque paramètre de considération de confort dans l'ensemble de paramètres de considération de confort, la génération, dans le graphique en forme de filet, d'une courbe connectant les résultats d'évaluation de valeur booléenne des paramètres de considération de confort.

4. Procédé de génération d'informations d'évaluation de plan de déplacement selon la revendication 2, dans lequel les informations d'évaluation de chaque paramètre de considération de confort dans l'ensemble de paramètres de considération de confort sont représentées par une valeur comprise dans [S, Z], S est une valeur limite inférieure d'un intervalle de référence prédéfini, Z est une valeur limite supérieure de l'intervalle de référence prédéfini, et différentes valeurs représentent des degrés d'évaluation pour un service représenté par le paramètre de considération de confort ;
la génération d'une liste et/ou d'un graphique d'évaluation de confort de l'objet d'évaluation selon les informations d'évaluation de chaque paramètre de considération de confort dans l'ensemble de paramètres de considération de confort comprend :
la prédétermination du graphique en forme de filet, dans lequel le graphique en forme de filet comprend une pluralité de segments de ligne rayonnant depuis un centre vers un bord externe, différents segments de ligne représentent différents paramètres de considération de confort, une valeur de chaque segment de ligne proche d'un côté central est S, et une valeur de chaque segment de ligne proche d'un côté de bord est Z, différentes positions au milieu correspondent à différentes valeurs, et les valeurs augmentent progressivement depuis le centre vers le bord ; et
selon un résultat d'évaluation de valeur de chaque paramètre de considération de confort dans l'ensemble de paramètres de considération de confort, la génération, dans le graphique en forme de filet, d'une courbe connectant les résultats d'évaluation de valeur des paramètres de considération de confort.

5. Procédé de génération d'informations d'évaluation de plan de déplacement selon la revendication 3 ou la revendication 4, dans lequel les paramètres de considération de confort sont divisés en différents types d'évaluation de paramètres, et des segments de ligne correspondant à des paramètres de considération de confort d'un même type d'évaluation de paramètres situés à des positions adjacentes dans le graphique en forme de filet.

6. Appareil de génération d'informations d'évaluation de plan de déplacement, comprenant :
une unité de détermination d'objet d'évaluation (401), configurée pour : pour chaque itinéraire planifié de déplacement dans au moins un itinéraire planifié de déplacement d'un point de départ à un point de fin d'un usager, déterminer au moins un objet d'évaluation sur l'itinéraire planifié de déplacement ;
une unité de détermination d'ensemble de paramètres de considération (402), configurée pour : pour chaque objet d'évaluation dans l'au moins un objet d'évaluation, déterminer un ensemble de paramètres de considération de confort correspondant à l'objet d'évaluation ;
une unité d'obtention d'informations d'évaluation (403), configurée pour : selon l'ensemble de paramètres de considération de confort qui correspond à l'objet d'évaluation et est déterminé par l'unité de détermination d'ensemble de paramètres de considération (402), obtenir des informations d'évaluation de chaque paramètre de considération de confort dans l'ensemble de paramètres de considération de confort, dans lequel les informations d'évaluation de chaque paramètre de considération de confort sont obtenues en établissant une connexion de communication avec des branches ou des zones discrètes,
dans lequel l'unité d'obtention d'informations d'évaluation (403) est configurée pour collecter, en établissant un canal d'évaluation correspondant, les informations d'évaluation d'usagers et obtenir des informations d'évaluation correspondant à un ou plusieurs paramètre(s) de considération de confort de l'évaluation ; et
une unité d'évaluation complète (404), configurée pour générer des informations d'évaluation de confort de l'objet d'évaluation selon les informations d'évaluation de chaque paramètre de considération de confort dans l'ensemble de paramètres de considération de confort,
une unité d'affichage configurée pour afficher élément par élément les informations d'évaluation de confort d'un objet d'évaluation actuel,
dans lequel l'au moins un objet d'évaluation déterminé par l'unité de détermination d'objet d'évaluation (401) comprend un moyen de transport ; et
l'ensemble de paramètres de considération de confort qui correspond au moyen de transport et est déterminé par l'unité de détermination d'ensemble de paramètres de considération (402) comprend tout ou partie des paramètres liés à la rapidité, des paramètres liés à la commodité, et des paramètres liés au soin, et
dans lequel les paramètres liés à la commodité comprennent tout ou partie des paramètres suivants :
densité de voyageurs et/ou s'il y a un siège libre, obtenu(s) en analysant des données d'image ou de vidéo de l'objet d'évaluation ;
s'il y a de la place pour les bagages, obtenu en provenance d'une société d'exploitation ; et
s'il y a la WIFI, obtenu en provenance d'une société d'exploitation ;
dans lequel les paramètres liés au soin comprennent tout ou partie des paramètres suivants :
un état d'air intérieur et/ou s'il y a un climatiseur, obtenu(s) en provenance d'une organisation d'exploitation de transport public ou en collectant des réactions de voyageurs à l'aide d'un réseau mobile ;
un indice de qualité d'air, AQI, obtenu en provenance d'un système de prévision météorologique ; et
s'il y un siège destiné en priorité aux personnes à mobilité réduite, obtenu en provenance d'une société d'exploitation ; et
dans lequel les paramètres liés à la rapidité comprennent tout ou partie des paramètres suivants :
une condition routière et/ou si un embouteillage peut/peuvent être évité(s), obtenu(s) en provenance d'informations de navigation cartographique ;
un taux de ponctualité et/ou s'il y a des retards fréquents, obtenu(s) en provenance de statistiques de base de données d'un système d'exploitation de transport public ou en provenance d'informations de réactions obtenues par des usagers du moyen de transport public ; et
une distance de marche et/ou une commodité de transfert, obtenu(s) en provenance d'informations de navigation cartographique.

7. Appareil de génération d'informations d'évaluation de plan de déplacement selon la revendication 6, dans lequel les informations d'évaluation qui sont de chaque paramètre de considération de confort dans l'ensemble de paramètres de considération de confort et qui sont obtenues par l'unité d'obtention d'informations d'évaluation (403) sont représentées par une valeur booléenne, et T représente que le moyen de transport prend en charge un service représenté par le paramètre de considération de confort ou l'évaluation positive pour le service, et F représente que le moyen de transport ne prend pas en charge le service représenté par le paramètre de considération de confort ou l'évaluation négative pour le service ; et l'unité d'évaluation complète (404) prédétermine le graphique en forme de filet, dans lequel le graphique en forme de filet comprend une pluralité de segments de ligne rayonnant depuis un centre vers un bord externe, différents segments de ligne représentent différents paramètres de considération de confort, et une valeur de chaque segment de ligne proche d'un côté central est F, et une valeur de chaque segment de ligne proche d'un côté de bord est T ; et selon un résultat d'évaluation de valeur booléenne de chaque paramètre de considération de confort dans l'ensemble de paramètres de considération de confort, une courbe connectant les résultats d'évaluation de valeur booléenne des paramètres de considération de confort est générée dans le graphique en forme de filet.

8. Appareil de génération d'informations d'évaluation de plan de déplacement selon la revendication 6, dans lequel les informations d'évaluation qui sont de chaque paramètre de considération de confort dans l'ensemble de paramètres de considération de confort et qui sont obtenues par l'unité d'obtention d'informations d'évaluation (403) sont représentées par une valeur comprise dans [S, Z], S est une valeur limite inférieure d'un intervalle de référence prédéfini, Z est une valeur limite supérieure de l'intervalle de référence prédéfini, et différentes valeurs représentent des degrés d'évaluation pour un service représenté par le paramètre de considération de confort ; et
l'unité d'évaluation complète (404) prédétermine le graphique en forme de filet, dans lequel le graphique en forme de filet comprend une pluralité de segments de ligne rayonnant depuis un centre vers un bord externe, différents segments de ligne représentent différents paramètres de considération de confort, une valeur de chaque segment de ligne proche d'un côté central est S, et une valeur de chaque segment de ligne proche d'un côté de bord est Z, différentes positions au milieu correspondent à différentes valeurs, et les valeurs augmentent progressivement depuis le centre vers le bord ; et selon un résultat d'évaluation de valeur de chaque paramètre de considération de confort dans l'ensemble de paramètres de considération de confort, une courbe raccordant les résultats d'évaluation de valeur des paramètres de considération de confort est générée dans le graphique en forme de filet.

9. Support de stockage lisible par ordinateur, stockant un programme informatique, dans lequel lorsque le programme informatique est exécuté par un processeur, les étapes du procédé de génération d'informations d'évaluation de plan de déplacement selon l'une quelconque des revendications 1 à 5 sont mises en œuvre.
